Europäisches Patentamt

European Patent Office

Office européen des brevets

(11) Numéro de publication : **0 296 006 B1**

# FASCICULE DE BREVET EUROPEEN

(45) Date de publication du fascicule du brevet :
**11.03.92 Bulletin 92/11**

(51) Int. Cl.⁵ : **B21B 13/14,** D21G 1/02,
F16C 13/00

(21) Numéro de dépôt : **88401339.2**

(22) Date de dépôt : **02.06.88**

(54) **Dispositif de maintien axial d'un cylindre à enveloppe tournante.**

(30) Priorité : **04.06.87 FR 8707823**

(43) Date de publication de la demande :
**21.12.88 Bulletin 88/51**

(45) Mention de la délivrance du brevet :
**11.03.92 Bulletin 92/11**

(84) Etats contractants désignés :
**DE GB**

(56) Documents cités :
**EP-A- 0 248 738**
**DE-A- 3 119 387**
**DE-B- 1 146 022**
**FR-A- 2 083 171**
**GB-A- 2 143 302**
**US-A- 2 395 915**

(56) Documents cités :
**US-A- 3 131 625**
**US-A- 3 639 956**
**PATENT ABSTRACTS OF JAPAN, vol. 7, no.
193 (M-238)[1338], 24 août 1983, page 37 M
238; & JP-A-58 93 508 (MITSUBISHI JUKOGYO
K.K.) 03-06-1983**

(73) Titulaire : **CLECIM
107 boulevard de la Mission Marchand
F-92402 Courbevoie Cédex (FR)**

(72) Inventeur : **Boulot, Dominique
70 Boulevard Jean Jaurès
F-92100 Boulogne (FR)**

(74) Mandataire : **Phélip, Bruno et al
c/o Cabinet Harlé & Phélip 21, rue de La
Rochefoucauld
F-75009 Paris (FR)**

## Description

L'invention a pour objet un dispositif de maintien axial d'un cylindre à enveloppe tournante du type utilisé pour le pressage ou le laminage de produits plats notamment dans l'industrie du papier mais s'applique plus spécialement aux installations de laminage de produits métalliques soumis à des efforts de serrage importants. Un dispositif conforme au préambule de la revendication est connu par ex. du document DE-A-3 119 387.

Depuis un certain temps, on a proposé d'utiliser, d'abord dans la fabrication du papier puis, récemment, dans les laminoirs, des cylindres à enveloppe tournante comprenant un arbre-support fixe en forme de poutre allongée, entouré par une enveloppe tubulaire montée rotative sur la poutre autour de paliers définissant un axe de rotation transversal à l'axe de laminage, et prenant appui sur la poutre par l'intermédiaire d'une pluralité de moyens de maintien répartis l'un à côté de l'autre sur la longueur de la poutre et centrés sur un plan axial d'appui qui correspond au plan de transmission de l'effort de serrage lorsque le cylindre fait partie d'un laminoir . En effet, l'enveloppe tubulaire, d'épaisseur relativement mince,est déformable et, en agissant sélectivement sur les différents moyens de maintien, on peut donner à la face externe du cylindre , par exemple dans un laminoir de type quarto ou sexto, un profil permettant de compenser le fléchissement de l'arbre et de corriger des défauts de planéité ou d'épaisseur relevés sur le produit en cours de laminage.

Les cylindres à enveloppe tournante sont connus depuis très longtemps dans l'industrie du papier et , par exemple , le brevet des Etats-Unis US-A-2.395.915 décrit un cylindre de ce type dans lequel chaque organe de maintien est constitué par une pièce en forme d'étrier qui prend appui sur la face interne de l'enveloppe par trois galets écartés sensiblement à 120° , respectivement un galet central placé dans le plan de serrage et deux galets latéraux s'appuyant sur des faces de guidage de l'arbre support,parallèles au plan de serrage . De la sorte, l'enveloppe tubulaire est maintenue parfaitement centrée dans le plan de serrage par les différents organes de maintien répartis sur toute sa longueur .

Cependant, un tel système de centrage par galets ne permet pas la transmission d'efforts importants à de grandes vitesses de rotation et c'est pourquoi l'on préfère réaliser le réglage du profil de l'enveloppe par des patins de maintien centrés dans le plan de serrage et interposés entre l'arbre et l'enveloppe, chaque patin prenant appui d'un côté sur la face interne de l'enveloppe par l'intermédiaire d'une face d'appui cylindrique sensiblement de même rayon et de l'autre sur l'arbre support par l'intermédiaire d'un moyen de poussée réglable, généralement un vérin hydraulique qui permet de régler individuellement la poussée de chaque patin dans le sens radial de façon à donner à l'enveloppe tubulaire le profil convenable.

Un fluide hydraulique est introduit en continu entre la face d'appui du patin et la face interne de l'enveloppe de façon à former un film lubrifiant permettant la rotation de l'enveloppe en prenant appui sur les patins.

Une telle disposition est décrite par exemple, dans le document US-A-3 131625.

Dans ces dispositions connues, le centrage de l'enveloppe sur l'arbre était assuré par les organes de maintien répartis sur toute sa longueur et il n'était pas prévu de paliers de centrage aux extrémités de l'enveloppe.

Cependant, l'enveloppe ainsi montée flottante sur sur les extrémités des patins a tendance à se déformer et à être entraînée transversalement par le produit lui-même lorsque ce dernier est appliqué directement sur le cylindre, ou bien par la rotation du cylindre adjacent dans le cas , par exemple où le cylindre à enveloppe tournante constitue le cylindre d'appui d'un laminoir.L'enveloppe tubulaire est donc, de préférence maintenue à chaque extrémité par des paliers de centrage eux-mêmes maintenus centrés dans le plan de serrage . Chaque palier est constitué, de façon classique, d'une bague externe et d'une bague interne entre lesquelles sont interposés des rouleaux ou des billes, la bague externe étant solidaire de l'enveloppe et la bague interne étant centrée dans le plan de serrage par des organes de guidage coulissant ménagés sur l'arbre-support.

Par exemple, selon une disposition prévue dans ce but dans le document FR-A- 2083 171, la bague interne de chaque palier est munie de faces de guidage montées coulissantes le long de méplats correspondants ménagés sur l'arbre support et parallèles au plan de serrage . De la sorte, l'enveloppe tubulaire peut se déplacer légèrement par rapport à l'arbre support en fonction des efforts appliqués mais en restant bien centrée dans le plan de serrage.

Ces dispositions connues, qui étaient prévues pour l'industrie du papier, c'est-à-dire pour des efforts relativement peu importants, ne sont pas immédiatement transposables à l'industrie métallurgique et en particulier aux laminoirs dans lesquels le cylindre doit servir à la transmission d'un effort de laminage très important et peut,en outre, avoir tendance à se déplacer parallèlement à l'axe par rapport à l'arbre support sous l'action des efforts appliqués.

Il faut donc assurer le maintien axial de l'enveloppe mais en laissant à celle-ci la possibilité de se positionner et de se déformer indépendamment de l'arbre.

L'invention a pour but de résoudre ce problème et a donc pour objet un dispositif de maintien axial d'un cylindre à enveloppe tournante du type comprenant un arbre fixe en forme de poutre allongée porté à chaque extrémité par une empoise de support dans un bâti fixe, une enveloppe cylindrique tubulaire enfilée sur l'arbre est montée rotative autour d'un axe de rotation sur une série de patins de maintien alignés interposés entre l'arbre et l'enveloppe et associés chacun à un moyen de poussée pour le réglage du profil de l'enveloppe, cette dernière étant munie à chaque extrémité d'un palier de centrage sur l'axe de rotation comprenant une bague externe solidaire en rotation de l'enveloppe et une bague interne bloquée en rotation.

Conformément à l'invention, chaque palier de centrage est aménagé de façon à encaiser des poussées axiales et prend appui axialement sur l'empoise de support par l'intermédiaire d'un dispositif d'appui flottant susceptible d'exercer une pression axiale uniformément répartie sur la bague interne du palier en suivant les décalages angulaires de l'axe du palier par rapport à l'axe de l'extrémité correspondante de l'arbre qui résultent des déformations respectives de l'enveloppe et de l'arbre sous l'action des efforts appliqués en service .

Selon une caractéristique préférentielle de l'invention, le dispositif d'appui flottant de chaque palier comprend une pluralité de poussoirs répartis régulièrement autour de l'axe et montés coulissant parallèlement à l'axe sur une douille enfilée sur l'extrémité de l'arbre et constituant une partie de l'organe de support, chaque poussoir prenant appui sur la bague interne du palier avec possibilité de déplacement axial .

Chaque poussoir constitue avantageusement le piston d'un vérin hydraulique dont le corps est ménagé à l'intérieur de la douille, lesdits vérins étant reliés à un circuit hydraulique commun de maintien sous pression .

De préférence, le dispositif d'appui comprend en outre un anneau de frottement interposé entre les poussoirs et la face frontale de la bague interne du palier et logés avantageusement dans un logement ménagé à l'extrémité frontale de la douille avec un jeu angulaire permettant audit anneau de suivre les décalages du palier par rapport à la douille .

De la sorte, il est possible d'alimenter les vérins des poussoirs sous une pression suffisante pour permetre l'application de l'anneau de frottement contre la bague interne du palier en lui laissant cependant une possibilité de glissement permettant le positionnement radial de l'enveloppe par rapport à l'arbre fixe, la pression pouvant ensuite augmenter sous l'action des efforts axiaux transmis par l'enveloppe.

Selon une disposition particulièrement avantageuse utilisable lorsque le cylindre est appliqué à un laminoir et doit transmettre un effort important, la bague interne de chaque palier est bloquée en rotation par rapport à l'organe de support de l'arbre par une clavette unique centrée dans le plan de serrage et placée du côté diamétralement opposé au patin de maintien , ces derniers couvrant un secteur angulaire suffisant pour assurer le centrage de l'enveloppe par rapport à l'arbre du côté opposé .

Mais l'invention sera mieux comprise par la description suivante d'un mode de réalisation particulier, donné à titre d'exemple et représenté sur les dessins annexés.

La figure 1 est une vue schématique de la partie supérieure d'un laminoir équippé d'un cylindre à enveloppe tournante .

La figure 2 représente en coupe axiale l'extrémité du cylindre et son organe de support .

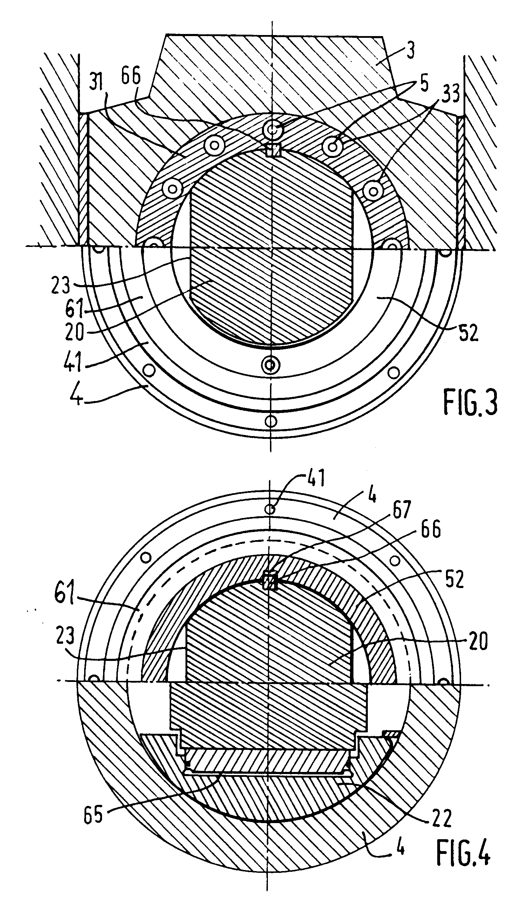

La figure 3 est une demi-vue en coupe transversale selon la ligne A-B de la figure 2.

La figure 4 est une demi-vue en coupe transversale selon la ligne C-D de la figure 2.

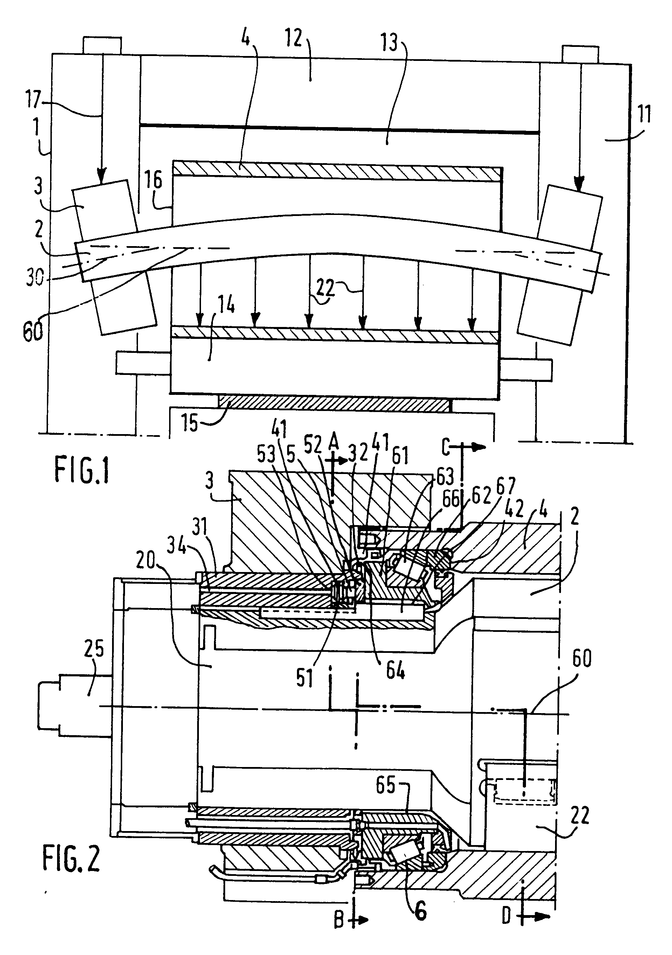

Sur la figure 1, on a représenté très schématiquement un laminoir comprenant une cage 1 constituée de deux colonnes verticales 11 reliées par une traverse 12 et délimitant une fenêtre 13 à l'intérieur de laquelle sont placés l'ensemble des cylindres,respectivement les deux cylindres de travail 14 entre lesquels passe le produit 15 et les cylindres d'appui 16 qui les encadrent . L'un au moins de ces cylindres d'appui est constitué d'un cylindre à enveloppe déformable comprenant un arbre fixe 2 porté à chaque extrémité par une empoise de support 3 logée dans la colonne correspondante 11 du laminoir et sur lequel est enfilée une enveloppe cylindrique 4 prenant appui sur l'arbre par l'intermédiaire d'une pluralité d'organes de maintien 22.

L'effort de serrage appliqué sur le produit 15 de largeur plus faible que l'écartement des empoises 3 entraîne un centrage de l'arbre 2 qui est compensé en réglant le profil de l'enveloppe 4 au moyen des organes de maintien 22 de façon à maintenir la régularité de la pression exercée sur la largeur du produit 15.

Il en résulte, à chaque extrémité de l'enveloppe, un certain décalage angulaire entre l'axe 60 du palier 6 et l'axe 30 de l'empoise.

Comme on l'a représenté plus en détail sur la figure 2, chaque empoise de support 3 comprend une douille 31 dans laquelle est enfilée sans jeu l'extrémité correspondante 20 de l'arbre 2.

L'enveloppe tubulaire 4 est munie à chaque extrémité d'un palier de centrage 6 constitué d'une bague interne 61 et d'une bague externe 62 entre lesquelles sont interposés des rouleaux coniques 63 de telle sorte que, selon l'une des caractéristiques de l'invention, le palier 6 constitue une butée susceptible d'encaisser des poussées axiales . A cet effet, le palier 6 est logé dans un évidement interne 41 pratiqué à l'extrémité de l'enveloppe 4.

La palier 6 est appliqué , par sa bague interne 62, contre le fond 42 du logement 41 par une pluralité de poussoirs 5 répartis régulièrement autour de l'axe et logés dans des alésages 33 ménagés sur la face frontale 32 de la douille 31 opposée au palier 6. Chaque poussoir 5 est solidaire d'un piston 51 coulissant à l'intérieur de l'alésage 33 suivant une direction parallèle à l'axe , l'ensemble constituant un petit vérin hydraulique dont la chambre 53 est limitée par l'alésage 33 et le piston 51.Les chambres 53 des différents vérins sont reliées entre elles par un canal circulaire non représenté ménagé dans la douille 31, et l'ensemble peut être mis sous pression avant la mise en service par un canal 34 ménagé dans la douille et parallèle à l'axe .

Un anneau plat 52 est interposé entre les poussoirs 5 et la face frontale 64 de la bague interne 61 du palier 6 Cette dernière est enfilée sur l'extrémité 20 de l'arbre 2 avec un jeu 65 permettant à l'enveloppe 4 de se décaler et de se déformer par rapport à l'arbre 2 sous l'action des patins de maintien 22.

La bague interne 61 du palier 6 doit être bloquée en rotation et ce blocage peut être réalisé de façon connue par exemple au moyen d'un ou plusieurs axes parallèles au plan de serrage, montés sur l'extrémité de l'arbre-support et coulissant dans des alésages correspondants ménagés sur la bague interne du palier, selon la disposition du brevet allemand 1.146.022.Cependant , dans le mode de réalisation représenté sur les figures , on préfère laisser à l'enveloppe une certaine liberté de positionnement par rapport aux autres cylindres en réalisant, le blocage en rotation au moyen d'une clavette unique 66 centrée dans le plan de serrage du côté opposé aux patins de maintien 22 et s'engageant dans des rainures correspondantes et alignées ménagées dans la bague interne 61 du palier 6, dans l'anneau de frottement 52 , dans la douille 31 et dans l'extrémité 20 de l'arbre 2.

Pour permettre les décalages et déformations de l'enveloppe 4 et de ses paliers 6 par rapport à l'arbre 2, un jeu 67 égal au jeu 65 est ménagé entre la clavette 66 et le fond de la rainure de la bague interne 61.

L'anneau de frottement 52 est inséré dans un logement ménagé sur la face frontale de la douille 31 avec un léger jeu mécanique permettant un certain décalage angulaire de l'axe de la douille 31 par rapport à l'axe de l'anneau de frottement 52 appliqué contre la bague interne 61 par les poussoirs 5 ,ces derniers étant munis d'une face d'appui arrondie .

Comme on l'a indiqué plus haut , les chambres 53 des vérins des poussoirs 5 sont reliées entre elles de façon à former un circuit fermé qui, avant la mise en service, est placé sous une certaine pression au moyen du canal d'alimentation 34, celui-ci étant ensuite fermé de façon que la pression soit maintenue. Cette pression est simplement suffisante pour appliquer l'anneau 52 contre la bague 61 mais sans s'opposer au glissement d'une pièce par rapport à l'autre. De la sorte, à la mise en service, l'enveloppe 4 centrée sur les patins de maintien 22 peut prendre une position d'équilibre par rapport à l'arbre 2 sous l'action de l'effort appliqué dans le plan de serrage et des diverses sollicitations .

En cours de laminage, l'ensemble des poussoirs 5 alimentés sous une même pression et en circuit fermé constitue un appui flottant ,tout déplacement dans un sens des poussoirs d'un côté de l'axe étant compensé par un déplacement inverse des poussoirs placés du côté opposé grâce à la libre circulation de l'huile .Toute tendance à un déplament axial de l'enveloppe 4 dans un sens ou dans l'autre est empêchée par l'ensemble des poussoirs du palier 6 placé du côté opposé au déplacement et se traduit simplement par une augmentation de pression dans les chambres des vérins.

La dispositif de butée axiale selon l'invention permet donc à l'enveloppe de se positionner librement et de se déformer indépendamment de la poutre sans introduire d'efforts parasites susceptibles de perturber le réglage du profil de l'enveloppe.

Bien entendu, l'invention ne se limite pas aux détails du mode de réalisation qui vient d'être décrit et qui pourrait faire l'objet de variantes sans s'écarter du cadre de protection défini par les revendications.

En particulier , dans l'exemple représenté, les paliers 6 sont maintenus dans le plan de serrage par une seule clavette, le centrage de l'enveloppe étant assuré sur toute sa longueur par les patins de maintien qui, à cet effet,couvrent un secteur angulaire suffisant , compris entre 90° et 180°, de la paroi interne de l'enveloppe.Mais les paliers 6 pourraient également être centrés directement sur l'arbre par l'ntermédiaire de deux clavettes ou bien de faces de guidage parallèles au plan de serrage et susceptibles de glisser sur des faces planes correspondantes ménagées sur les extrémités 20 de l'arbre 2.

Enfin,l'invention a été décrite dans la cadre d'un laminoir de type quarto mais peut évidemment s'appliquer à d'autres types de laminoirs ou à d'autres installations utilisant des cylindres à enveloppe tournante.

## Revendications

1.Dispositif de maintien axial d'un cylindre à enveloppe tournante comprenant un arbre fixe (2) en forme de poutre allongée porté à chaque extrémité (20) par une empoise de support (3) dans un bâti fixe (1) , une enveloppe cylindrique tubulaire (4) enfilée sur l'arbre (2) et montée rotative autour d'un axe de rotation sur une série de patins de maintien (22) alignés, interposés entre l'arbre (2) et l'enveloppe (4) et associés chacun à un moyen de poussée pour le réglage du profil de l'enveloppe (4), cette dernière étant munie à chaque extrémité d'un palier (6) de centrage sur l'axe de rotation comprenant une bague externe (62) solidaire en rotation de l'enveloppe (4) et une bague interne (61) bloquée en rotation, caractérisé par le fait que chaque palier de centrage (6) est aménagé de façon à encaisser des poussées axiales et prend appui axialement sur l'empoise de support (3) par l'intermédiaire d'un dispositif d'appui flottant susceptible d'exercer une pression axiale uniformément répartie sur la bague interne (61) du palier (6) en suivant les décalages angulaires de l'axe (60) du palier (6) par rapport à l'axe (25) de l'extrémité (20)correspondante de l'arbre (2) qui résulte des déformations respectives de l'enveloppe et de l'arbre sous l'action des efforts appliqués en service.

2.Dispositif de maintien axial selon la revendication 1, caractérisé par le fait que le dispositif d'appui flottant de chaque palier (6) comprend une pluralité de poussoirs (5) répartis régulièrement autour de l'axe (25) et montés coulissant parallèlement à ce dernier à l'intérieur d'une douille (31) enfilée sur l'extrémité (20)de l'arbre (2) et constituant une partie de l'empoise de support (3) , chaque poussoir (5) prenant appui sur la bague interne (61) du palier (6) avec possibilité de déplacement axial.

3.Dispositif de maintien selon la revendication 2, caractérisé par le fait que chaque poussoir (5) constitue le piston (51) d'un vérin hydraulique (53) dont le corps est ménagé à l'intérieur de la douille (31), lesdits vérins (53) étant reliés à un circuit hydraulique commun fermé et maintenu sous pression .

4.Dispositif de maintien selon l'une des revendications 2 et 3 , caractérisé par le fait que le dispositif d'appui comprend un anneau de frottement (52) interposé entre les poussoirs (5) et la face frontale (64) de la bague interne (61) du palier (6).

5.Dispositif de maintien axial selon la revendication 4, caractérisé par le fait que l'anneau de frottement (52) est enfilé sans jeu transversal dans un logement ménagé à l'extrémité frontale de la douille (31) avec une possibilité de rotulage permettant audit anneau (52) de suivre les décalages angulaires du palier (6) par rapport à la douille (31).

6.Dispositif de maintien axial selon la revendication 4, caractérisé par le fait que les vérins (53) des poussoirs (5) sont maintenus sous une pression suffisante pour permettre l'application de l'anneau de frottement (52) contre la bague interne (61) du palier sans s'opposer au glissement de l'un sur l'autre pour le positionnement de l'enveloppe (4) par rapport à l'arbre (2) sous l'action des efforts appliqués .

7.Dispositif de maintien axial selon l'une des revendications précédentes, caractérisé par le fait que la bague interne (61) de chaque palier (6) est munie sur sa face interne de faces de guidage parallèles montées à glissement le long de faces planes correspondantes (23) ménagées à l'extrémité (20)de l'arbre (2) et parallèles au plan de transmission des efforts de serrage appliqués sur le cylindre.

8. Dispositif de maintien axial selon l'une des revendications 1 à 7, appliqué à un cylindre de laminoir pour la transmission de l'effort de laminage suivant un plan de serrage passant par l'axe du cylindre et dans lequel sont sensiblement centrés les patins de maintien (22), caractérisé par le fait que la bague interne (61)de chaque palier (6) est bloquée en rotation par rapport à l'empoise de support (3) de l'arbre (2) par une clavette unique (66) centrée dans le plan de serrage placé du côté diamétralement opposé au patin de maintien (22), ces derniers couvrant une surface angulaire suffisante pour assurer le centrage de l'enveloppe par rapport à l'arbre du côté opposé à la clavette .

## Claims

1. Axial support device for a roll with rotating sleeve comprising a fixed shaft (2) in the form of an elongated beam carried at each end (20) by a support housing (3) in a fixed frame (1), a tubular cylindrical sleeve (4) slipped onto the shaft (2) and mounted so as to rotate about an axis of rotation on a series of aligned holding shoes (22) inserted between the shaft (2) and the sleeve (4) and each associated with a thrust means for the adjustment of the profile of the sleeve (4), the latter being equipped at each end with a bearing (6) for centring on the axis of rotation comprising an outer ring (62) which is solid in rotation with the sleeve (4) and an inner ring (61) locked in rotation, characterized in that each centring bearing (6) is arranged so as to contain axial thrusts and rests axially on the support housing (3) by means of a floating support device which is capable of exerting an axial pressure which is uniformly distributed on the inner ring (61) of the bearing (6) by following the angular offsets of the axis (60) of the bearing (6) with respect to the axis (25) of the corresponding end (20) of the shaft (2) which result from the respective deformations of the sleeve and of the shaft under the influence of the stresses applied during working.

2. Axial support device according to Claim 1, characterized in that the floating support device of each bearing (6) comprises a plurality of thrusters (5) distributed regularly about the axis (15) and mounted so as to slide parallel to the latter inside a bush (31) slipped onto the end (20) of the shaft (2) and forming a part of the support housing (3), each thruster (5) resting on the inner ring (61) of the bearing (6) with a possibility of axial displacement.

3. Support device according to Claim 2, characterized in that each thruster (5) forms the piston (51) of a hydraulic jack (53), the body of which is arranged inside the bush (31), the said jacks (53) being connected to a common hydraulic circuit which is closed and kept under pressure.

4. Support device according to one of Claims 2 and 3, characterized in that the support device comprises a friction ring (52) inserted between the thrusters (5) and the front surface (64) of the inner ring (61) of the bearing (6).

5. Axial support device according to Claim 4, characterized in that the friction ring (52) is slipped without transverse play into a housing arranged at the front end of the bush (31) with a possibility for pivoting allowing the said ring (52) to follow the angular offsets of the bearing (6) with respect to the bush (31).

6. Axial support device according to Claim 4, characterized in that the jacks (53) of the thrusters (5) are held under sufficient pressure to allow the friction ring (52) to be applied against the inner ring (61) of the bearing without preventing the sliding of one on the other for the positioning of the sleeve (4) with respect to the shaft (2) under the influence of the stresses applied.

7. Axial support device according to one of the preceding claims, characterized in that the inner ring (61) of each bearing (6) is equipped on its inner surface with parallel guide surfaces mounted so as to slide along the corresponding plane surfaces (23) arranged at the end (20) of the shaft (2) and parallel to the plane of transmission of the rolling stresses applied to the roll.

8. Axial support device according to one of Claims 1 to 7, applied to a rolling mill cylinder for the transmission of the rolling stress along a contact plane passing through the axis of the rolls and in which the holding shoes (22) are substantially centred, characterized in that the inner ring (61) of each bearing (6) is locked in rotation with respect to the support member (3) of the shaft (2) by a single key (66) centred in said contact plane located on the side diametrally opposite the holding shoe (22), the latter covering an angular surface which is sufficient to provide centring of the sleeve with respect to the shaft on the side opposite the key.

**Patentansprüche**

1. Vorrichtung zum axialen Festhalten einer Walze mit drehbarem Mantel bestehend aus einer feststehenden als länglicher Träger ausgebildeten Welle (2), die an jedem Ende (20) durch ein in einem stationären Gestell (1) angeordneten Einbaustück (3) abgestützt ist, einem rohrförmigen über die Welle (2) geschobenen Zylindermantel (4), der drehbar um eine Rotationsachse auf reihenmässig ausgerichteten, zwischen der Welle (2) und dem Mantel (4) dazwischengeschalteten Haltekufen (22) montiert ist, denen jeweils ein Schubmittel zur Profileinstellung des Mantels (4) zugeordnet ist, wobei dieser zum Zentrieren auf der Rotationsachse an jedem Ende ein Lager (6) aufweist, bestehend aus einem mit dem Mantel (4) drehbweglich verbundenen Aussenring (62) und einem drehfesten Innenring (61), dadurch gekennzeichnet, dass jedes Zentrierlager (6) derart angeordnet ist, dass es axiale Schubkräfte aufnimmt und sich in axialer Richung auf dem Einbaustück (3) über eine schwimmende Stützvorrichtung abstützt, die den Innenring (61) des Lagers (6) mit einem regelmässig verteilten Axialdruck je nach den Winkelversetzungen der Achse (60) des Lagers (6) zur Achse (25) des entsprechenden Endes (20) der Welle (2) beaufschlagen kann, die sich aus den jeweiligen Mantel- une Wellenverformungen unter der im Betrieb ausgeübten Kräfte ergeben.

2. Vorrichtung zum axialen Festhalten nach Anspruch 1, dadurch gekennzeichnet, dass die schwimmende Stützvorrichtung von jedem Lager (6) mehrere um die Achse (25) regelmässig verteilte Stössel (5) umfasst, die parallel zu dieser innen in einer, am Ende (20) der Welle (2) aufgeschobenen und ein Teil des Einbaustückes (3) bildenden Hülse gleitend montiert sind, wobei jeder Stössel (5) sich auf dem Innenring (61) des Lagers (6) mit axialer Verschiebemöglichkeit abstützt.

3. Vorrichtung zum Festhalten nach Anspruch 2, dadurch gekennzeichnet, dass jeder Stössel (5) den Kolben (51) eines Hydraulikzylinders (53) bildet, dessen Gehäuse innen in der Hülse (31) angeordnet ist, wobei die Zylinder (53) an einen geschlossenen, unter Druck stehenden, gemeinsamen Hydraulikkreis angeschlossen sind.

4. Vorrichtung zum Festhalten nach einem der Ansprüch 2 und 3, dadurch gekennzeichnet, dass die Stützvorrichtung einen, zwischen die Stössel (5) und der Vorderfläche (64) des Innenringes (61) des Lagers (6) dazwischengeschalteten Reibring (52) umfasst.

5. Vorrichtung zum axialen Festhalten nach Anspruch 4, dadurch gekennzeichnet, dass der Reibring (52) ohne Querspiel in ein Gehäuse eingeführt ist, das am Vorderende der Hulse (31) angeordnet ist, sodass der Ring (52) den Winkelversetzungen des Lagers (6) zur Hülse (31) folgen kann.

6. Vorrichtung zum axialen Festhalten nach Anspruch 4, dadurch gekennzeichnet, dass die Zylinder (53) der Stössel (5) mit einem ausreichenden Druck festgehalten werden damit der Reibring (52) gegen den Lager-Innenring (61) ohne einer gegenseitigen Gleitbewegung entgegenzuwirken gedrückt werden kann, zum Positionieren des Mantels (4) zur Welle (2) unter der Wirkung der beaufschlagten Kräfte.

7. Vorrichtung zum axialen Festhalten nach einem der vorhergehenden Ansprüche, dadurch gekennzeichnet, dass der Innenring (61) von jedem Lager (6) auf seiner Innenfläche parallele Führungsflächen aufweist, die entlang von entsprechenden am Ende (20) der Welle (2) angeordneten Planflächen (23) gleitend montiert sind, die parallel zur Uebertragungsebene der auf die Walze ausgeübten Anstellungskräfte sind.

8. Vorrichtung zum axialen Festhalten nach einem der Ansprüche 1 bis 7, zum Einsatz mit einer Walze zwecks Uebertragung der Walzkraft gemäss einer durch die Walzenachse verlaufenden Anstellungsebene,in welcher die Festhaltekufen (22) wesentlich zentriert sind, dadurch gekennzeichnet, dass der Innenring (61) von jedem Lager (6) drehfest zum Einbaustück (3) der Welle (2) durch einen einzigen Keil (66) festgestellt ist, der in der Anstellungsebene auf der entgegengesetzten Seite zur Festhaltekufe (22) zentriert ist, wobei die letzteren eine ausreichende Winkelfläche abdecken um das Zentrieren des Mantels zur Welle auf der entgegengesetzten Seite des Keils zu gewährleisten.

FIG.1

FIG.2

FIG.3

FIG.4